# EUROPÄISCHE PATENTSCHRIFT

(11) **EP 3 105 838 B1**
(45) Veröffentlichungstag und Bekanntmachung des Hinweises auf die Patenterteilung: **24.07.2019**
(21) Anmeldenummer: 15704497.5
(22) Anmeldetag: 05.02.2015
(51) Int. Cl.: H02K 1/02, H02K 1/27, H02K 1/28, C22C 38/60

(54) **ELEKTRISCHER ANTRIEBSMOTOR MIT CHROMSTAHL, PUMPE UND HAUSHALTSGERÄT MIT EINER SOLCHEN PUMPE**
ELECTRIC DRIVE MOTOR, PUMP, AND A DOMESTIC APPLIANCE COMPRISING SUCH A PUMP
MOTEUR D'ENTRAÎNEMENT ÉLECTRIQUE, POMPE ET APPAREIL MÉNAGER ÉQUIPÉ D'UNE TELLE POMPE

(30) Priorität: 12.02.2014 DE 102014202570
(43) Veröffentlichungstag der Anmeldung: 21.12.2016
(73) Patentinhaber: BSH Hausgeräte GmbH, 81739 München (DE)
(72) Erfinder: BINDER, Alfred, 72406 Bisingen (DE); KALAVSKY, Michal, 04023 Kosice (SK); LUTZ, Stephan, 86637 Zusamaltheim (DE); PERTERMANN, Hans-Holger, 01259 Dresden (DE)
(86) Internationale Anmeldenummer: PCT/EP2015/052352
(87) Internationale Veröffentlichungsnummer: WO 2015/121137

(56) Entgegenhaltungen:
- EP-A1- 1 788 690
- WO-A1-2011/023349
- Wikipedia: "Edelstahl", , 7. Dezember 2013 (2013-12-07), XP002744595, Gefunden im Internet: URL:https://web.archive.org/web/2013120710 3750/http://de.wikipedia.org/wiki/Edelstah l [gefunden am 2015-09-17]
- Globalmetals.com: "Stainless Steel - 630 / 17-4PH", , 30. Dezember 2009 (2009-12-30), XP002744596, Gefunden im Internet: URL:http://www.globalmetals.com.au/_pdf/St ainless_Steel/Stainless_Steel_630.pdf [gefunden am 2015-09-17]

## Beschreibung

Die Erfindung betrifft einen elektrischen Antriebsmotor für eine Pumpe, aufweisend eine elektrisch ansteuerbare Statorwicklung und einen im Feld der Statorwicklung unter Belassen eines Ringspaltes drehantreibbar gelagerten Rotor, der eine Motorwelle, einen auf der Motorwelle sitzenden Magnetträger und wenigstens einen auf dem Magnetträger angeordneten Permanentmagnet aufweist. Die Erfindung betrifft außerdem eine Pumpe mit einem solchen Antriebsmotor und ein Haushaltsgerät, insbesondere eine Geschirrspülmaschine, eine Waschmaschine oder einen Trockner mit einem solchen elektrischen Antriebsmotor und/oder einer solchen Pumpe.

Die EP 1 788 690 A1 beschreibt ein Verfahren zum Herstellen eines Permanentmagnetrotors für einen synchronen Motor, insbesondere für eine Pumpe einer Waschmaschine für industrielle und private Verwendung und dergleichen, mit einem externen Stator umfassend einen zylindrischen zentralen Kern mit einer Achse und einem axialen Durchgang, der von einer Vielzahl von Permanentmagneten umgeben ist, die eine äußere Bogenfläche und eine innere Bogenfläche und Seitenkanten aufweisen, umfassend die Schritte des Anordnens eines becherartigen Körpers aus einem Plastikmaterial umfassend ein Grund-Ende, ein offenes Ende, eine Seitenwand und eine Vielzahl von sich längserstreckenden Ausnehmungen, die in der Seitenwand ausgebildet sind und Platzierungsaufnahmen für eine Platzierung der Magnete definieren; Einbringen des zentralen Kerns in den becherartigen Körper und Anordnen der Magnete in Übereinstimmung mit den Platzierungsaufnahmen; Einspritzen eines Plastikmaterials in den becherartigen Körper und um diesen herum in Übereinstimmung mit den Ausnehmungen, wobei eine käfigartige Struktur mit gegenüberliegenden Böden und Streben, die sich zwischen den gegenüberliegenden Böden erstrecken, erhalten wird, wobei die gegenüberliegenden Böden an den Enden des becherartigen Körpers angrenzen und die Streben in den Ausnehmungen aufgenommen sind.

Die Aufgabe der Erfindung ist es, einen elektrischen Antriebsmotor insbesondere für eine Pumpe, wie eine Pumpe mit einem solchen Antriebsmotor und ein Haushaltsgerät mit einer solchen Pumpe zu schaffen, wodurch eine Verbesserung der Lebensdauer und/oder eine Verbesserung des Wirkungsgrads erreicht wird.

Die Aufgabe der Erfindung wird gelöst durch einen elektrischen Antriebsmotor für eine Pumpe, aufweisend eine elektrisch ansteuerbare Statorwicklung und einen im Feld der Statorwicklung unter Belassen eines Ringspaltes drehantreibbar gelagerten Rotor, der eine Motorwelle, einen auf der Motorwelle sitzenden Magnetträger und wenigstens einen auf dem Magnetträger angeordneten Permanentmagnet aufweist, wobei der Magnetträger aus einem ferromagnetischen Chromstahl hergestellt ist.

Indem der Magnetträger aus einem ferromagnetischen Chromstahl hergestellt ist, kann ein korrosionsbeständiger Magnetträger aus einem Stahlwerkstoff geschaffen werden. Anders ausgedrückt kann der Magnetträger aus Edelstahl bestehen. Die Korrosionsbeständigkeit des Magnetträgers erhöht die Lebensdauer des elektrischen Antriebsmotors, insbesondere der damit angetriebenen Pumpe. Dies ist besonders dann relevant, wenn es sich um einen Nassläufer handelt, der zumindest weitgehend ungeschützt in einem korrosiven Medium, wie Wasser oder einer Lauge läuft, wie dies beispielsweise in der Verwendung in Haushaltsgeräten, wie Geschirrspülmaschinen, Waschmaschinen und Trocknern der Fall ist.

Bei dem Magnetträger, der aus einem ferromagnetischen Chromstahl hergestellt ist, kann es sich somit insbesondere um einen weichmagnetischen Stahlwerkstoff handeln, der sich in einem Magnetfeld leicht magnetisieren lässt. Insoweit sollte der Magnetträger deshalb aus einem ferritischen Chromstahl hergestellt sein. Wenn jedoch der Magnetträger eher hartmagnetische Eigenschaften aufweisen soll und weniger weichmagnetische Eigenschaften besitzen soll, dann sollte der Magnetträger aus einem martensitischen Chromstahl hergestellt sein.

Um einen ausreichend korrosionsbeständigen Magnetträger zu schaffen, sollte der Magnetträger aus einem insbesondere ferritischen, gegebenenfalls martensitischen Chromstahl mit wenigstens 10,5 % Chromanteil hergestellt sein. Dabei kann der Kohlenstoffanteil höchstens 1,2% betragen, um eine ausreichend hohe Korrosionsbeständigkeit zu gewährleisten. Um einen ferromagnetischen Magnetträger zu schaffen, sollte der Chromstahl zumindest im Wesentlichen oder vollständig nickelfrei sein.

Der Magnetträger kann also aus einem nickelfreien Chromstahl hergestellt sein.

In einer bevorzugten Ausführungsform kann der Magnetträger aus einem Chromstahl mit 16% bis 18% Chromanteil, insbesondere ca. 17% Chromanteil, insbesondere der Werkstoffnummer 1.4016 gemäß EN 10027-2 (X6Cr17, AISI 430) hergestellt sein.

In allen Ausführungsformen kann der Magnetträger aus einem Blechpaket von mehreren übereinander gestapelten, miteinander verbundenen Blechplatten hergestellt sein.

So kann der Magnetträger auf kostengünstige Weise hergestellt werden. Dazu können aus einem Coil eines gewalzten Stahlblechbandes einzelne Blechplatten ausgestanzt oder ausgeschnitten werden und mehrere Blechplatten gleicher Außenkontur zu einem Blechpaket ausgestapelt und miteinander verbunden werden. Die einzelnen, übereinander gestapelten Blechplatten können beispielsweise durch Umformen einzelner Verbindungsstellen der Blechplatten kraft-/formschlüssig miteinander verbunden werden.

Alternativ oder ergänzend zu einem Motorträger aus ferromagnetischen Chromstahl kann auch die Motorwelle aus einem Chromstahl hergestellt sein. Anders ausgedrückt kann auch die Motorwelle aus Edelstahl bestehen.

Indem die Motorwelle aus einem Chromstahl hergestellt ist, kann eine korrosionsbeständige Motorwelle aus einem Stahlwerkstoff geschaffen werden. Die Korrosionsbeständigkeit der Motorwelle erhöht die Lebensdauer des elektrischen Antriebsmotors, insbesondere der damit angetriebenen Pumpe. Dies ist besonders dann relevant, wenn es sich um einen Nassläufer handelt, der zumindest weitgehend ungeschützt in einem korrosiven Medium, wie Wasser oder einer Lauge läuft, wie dies beispielsweise in der Verwendung in Haushaltsgeräten, wie Geschirrspülmaschinen, Waschmaschinen und Trocknern der Fall ist.

Die Motorwelle kann insbesondere aus einem härtbaren, insbesondere austenitischen oder martensitischen Chromstahl hergestellt ist.

Bei der Motorwelle, die aus einem härtbaren Chromstahl hergestellt ist, kann es sich somit insbesondere auch um einen weichmagnetischen Stahlwerkstoff handeln, der sich in einem Magnetfeld leicht magnetisieren lässt. Insoweit kann die Motorwelle deshalb auch aus einem austenitisch-ferritischen Chromstahl hergestellt sein, die auch als Duplexstähle bezeichnet werden.

Um eine ausreichend korrosionsbeständige Motorwelle zu schaffen, sollte die Motorwelle aus einem Chromstahl mit wenigstens 10,5 % Chromanteil hergestellt sein. Dabei kann der Kohlenstoffanteil höchstens 1,2% betragen, um eine ausreichend hohe Korrosionsbeständigkeit zu gewährleisten. Um eine außerdem härtbare Motorwelle zu schaffen, sollte der für die Motorwelle verwendete Chromstahl einen Nickelanteil von wenigstens 3% aufweisen.

In einer bevorzugten Ausführungsform kann die Motorwelle aus einem Chromstahl mit 15% bis 17% Chromanteil, insbesondere ca. 16% Chromanteil und 3% bis 5% Nickelanteil, insbesondere ca. 4% Nickelanteil, insbesondere der Werkstoffnummer 1.4542 gemäß EN 10027-2 (X5CrNiCuNb16-4, AISI 630) hergestellt sein.

In einer ersten Grundgestalt kann jeder Permanentmagnet eine in Richtung des Magnetträgers weisende ebene Grundfläche aufweisen und der Magnetträger einen polygonförmigen, insbesondere hexagonalen Querschnitt aufweisen.

In einer ersten Grundgestalt kann jeder Permanentmagnet eine in Richtung des Magnetträgers weisende, im Querschnitt kreisbogenförmige Grundfläche aufweisen und der Magnetträger einen kreisförmigen Querschnitt aufweisen.

In allen Ausführungsformen können die Permanentmagnete mittels eines durch Umspritzen des Magnetträgers hergestellten Kunststoffkäfigs an dem Magnetträger befestigt sein. Jeder Permanentmagnet kann dabei eine an den Ringspalt angrenzende Außenoberfläche aufweisen, welche durch wenigstens eine um die Außenoberfläche umlaufende Fase begrenzt ist, wobei die wenigstens eine Fase von dem Kunststoffkäfig formschlüssig eingefasst ist.

Damit das von der elektrisch ansteuerbaren Statorwicklung erzeugte Drehfeld mit hohem Wirkungsgrad auf den Rotor einwirken kann, sollte die Breite des Ringspaltes so weit wie möglich reduziert werden. Dies kann dadurch erfolgen, dass der Rotor derart aufgebaut ist, dass die Außenoberflächen der Permanentmagnete unmittelbar an den Ringspalt angrenzen. Da bei einer solchen Ausbildung des Rotors beispielsweise kein Stahltopf vorhanden, der die Permanentmagnete über ihren Umfang vollständig einkapselt und die Permanentmagnete auch nicht vollständig von Kunststoffmaterial eingeschlossen werden, kann der Abstand der Außenoberflächen der Permanentmagnete zu der Statorwicklung deutlich reduziert werden, wodurch sich der Wirkungsgrad des elektrischen Antriebsmotors erhöht. Auch wenn eine solche Verbesserung des Wirkungsgrades auch bei Verwendung von Permanentmagnete aus einem Seltene Erden Material eintritt, so ist eine Ausbildung des Rotors, bei dem die Außenoberflächen der Permanentmagnete unmittelbar an den Ringspalt angrenzen, besonders dann sinnvoll, wenn statt teuren Seltene Erden Magnete vorzugsweise ferritische, insbesondere hartferritische Permanentmagnete verwendet werden, welche eine deutlich geringere magnetische Permeabilität aufweisen als Seltene Erden Magnete. Hinsichtlich einer Kosteneinsparung haben jedoch ferritische, insbesondere hartferritische Permanentmagnete Vorteile.

Indem jeder Permanentmagnet eine an den Ringspalt angrenzende Außenoberfläche aufweist, welche durch wenigstens eine um die Außenoberfläche umlaufende Fase begrenzt ist und die wenigstens eine Fase von dem Kunststoffkäfig formschlüssig eingefasst ist, kann eine möglichst große Fläche der Außenoberfläche der Permanentmagnete unmittelbar an den Ringspalt angrenzen, wobei durch eine um die Außenoberfläche umlaufende wenigstens eine Fase die Permanentmagnete durch den Kunststoffkäfig formschlüssig an dem Magnetträger gehalten werden, ohne dass es eines separaten Stahltopfes oder eines die Permanentmagnete vollständig einschließenden Kunststoffkäfigs bedarf, wodurch die Permanentmagnete zwangsläufig in einem größeren Abstand von der Statorwicklung anzuordnen wären.

Alle Permanentmagnete eines Rotors sind vorzugsweise identisch ausgebildet. Sie können insbesondere in gleichen Abständen voneinander entfernt über den Umfang des Magnetträgers verteilt angeordnet sein. Die Außenoberflächen der Permanentmagnete weisen eine zylindermantelsegmentförmige Gestalt auf. Die über den Umfang des Magnetträgers verteilt angeordneten Permanentmagnete können sich in ihren Außenoberflächen insoweit zu einer im Wesentlichen zylindrischen Außenfläche ergänzen, die nur durch geringfügige Stege des Kunststoffkäfigs unterbrochen sind.

Dadurch, dass jeder Permanentmagnet wenigstens eine umlaufende Fase aufweist, können die um den Magnetträger angeordneten Permanentmagnete formschlüssig durch den umspritzten Kunststoffkäfig an dem Magnetträger derart befestigt werden, dass der Kunststoffkäfig zusammen mit den Permanentmagneten eine glattwandige zylindrische Mantelwand des Rotors bildet, die Fenster ausbildet, welche unmittelbar von den Außenoberflächen der Permanentmagnete gebildet werden.

Mittels der wenigstens einen Fase kann ein besonders ausgewogenes Verhältnis zwischen der Anforderung an einer möglichst großen, magnetisch wirksamen Außenoberfläche des Permanentmagneten und eines möglichst sicheren formschlüssigen Umgreifens der Permanentmagnete durch den Kunststoffkäfig zur sicheren Fixierung an dem Magnetträger erreicht werden.

Ergänzend kann in allen Ausführungsformen der Magnetträger eine Nabe zur Aufnahme der Motorwelle aufweisen, deren innere Mantelwand mit vorspringenden Rippen versehen ist, die sich insbesondere in axialer Richtung erstrecken. Die Rippen bewirken eine besonders zuverlässige Befestigung des Magnetträgers auf der Motorwelle.

Die Erfindung betrifft auch eine Pumpe, aufweisend einen elektrischen Antriebsmotor wie erfindungsgemäß beschrieben, bei welcher der Rotor, insbesondere dessen Magnetträger und/oder dessen die Motorwelle in einem Nassraum der Pumpe drehantreibbar gelagert ist und die Außenoberflächen der Permanentmagnete in Kontakt zu einer in dem Ringspalt des elektrischen Antriebsmotors befindlichen Flüssigkeit des Nassraumes stehen.

Die im Nassraum befindliche Flüssigkeit dient unter anderem der Kühlung und/oder Schmierung des Rotors bzw. der Lager des Rotors. Um einen hohen elektromagnetischen Wirkungsgrad zu erreichen, wird die äußere Mantelwand des Rotors, d.h. des Rotormagneten konstruktiv möglichst nahe an die Statorwicklung herangeführt. Dies hat zur Folge, dass zwischen Rotor bzw. Rotormagnet und der Innenwand des Nassraums nur ein sehr geringer Spalt vorhanden ist, der insbesondere während einer Rotation des Rotors nur relativ wenig von der Flüssigkeit durchströmt wird. Insoweit kann ein von einem Flüssigkeitszulauf abgewandter Nassraumbereich nur sehr schwer allein über diesen Spalt durchspült werden. Insbesondere kann in einem solchen hinteren, d.h. dem Pumpenrad abgewandten Nassraumbereich sich in unerwünschter Weise Luft- und/oder Dampfblasen ansammeln. Aufgrund der Rotation des Rotors sammeln sich tendenziell Luft- und/oder Dampfblasen im achsnahen Zentrum des Nassraumes nahe der Motorwelle und nicht in einem äußeren Umfang nahe des Spaltes. Mittels wenigstens eines im Magnetträger angeordneten Strömungskanals kann die Flüssigkeit besonders gut zirkulieren und insbesondere können Luft- und/oder Dampfblasen herausgeführt werden, so dass keine Gefahr besteht, dass die Lager des Rotors trockenlaufen, was die Lebensdauer der Pumpe und den Wirkungsgrad der Pumpe reduzieren würde. Durch ein Abführen von Luft- und/oder Dampfblasen läuft der Antriebsmotor und damit auch die Pumpe außerdem leiser.

Die Pumpe kann ein von dem elektrischen Antriebsmotor antreibbares Pumpenrad aufweist und die Motorwelle des elektrischen Antriebsmotors ergänzend eine Rändelung aufweist, auf welcher das Pumpenrad befestigt ist. Damit wird eine besonders zuverlässige Befestigung des Pumpenrads an der Motorwelle erreicht, was die Lebensdauer der Pumpe erhöhen kann.

Die folgenden Merkmale können einzeln oder in Kombination zueinander in unterschiedlichen Ausführungsformen Anwendung finden: Generell kann es sich bei dem Antriebsmotor um einen bürstenlosen Gleichstrom-Nassläufer-Pumpenantriebsmotor handeln. Bei dem Rotormagneten kann es sich generell um einen Permanentmagnet-Ring handeln, der an dem Halter befestigt ist.

Ganz allgemein kann der Gleichstrom-Pumpenantriebsmotor generell als ein von Flüssigkeit durchströmter Nassläufermotor ausgebildet sein und der Permanentmagnet-Rotor dabei in unmittelbarem Kontakt zur Flüssigkeit stehen. Der Magnetträger kann in allen Ausführungen entweder einstückig ausgebildet sein oder aus einem Blechpaket von mehreren übereinander gestapelten, miteinander verbundenen Blechplatten hergestellt sein.

Die Erfindung betrifft außerdem ein Haushaltsgerät, insbesondere eine Geschirrspülmaschine, eine Waschmaschine oder einen Trockner, das einen erfindungsgemäßen elektrischen Antriebsmotor und/oder eine erfindungsgemäße Pumpe, wie beschrieben, aufweist.

Verschiedene konkrete Ausführungsbeispiele erfindungsgemäßer elektrischer Antriebsmotoren sind in der nachfolgenden Beschreibung unter Bezugnahme auf die beigefügten Figuren näher erläutert. Konkrete Merkmale dieser Ausführungsbeispiele können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine Querschnittsansicht einer beispielhaften Pumpe eines Haushaltsgeräts mit einem erfindungsgemäßen elektrischen Antriebsmotor in Form eines Nassläufer-Pumpenantriebsmotors,
- Fig. 2: eine perspektivische Explosionsdarstellung einer ersten Ausführungsform eines Permanentmagnet-Innenrotors des erfindungsgemäßen elektrischen Antriebsmotors;
- Fig. 3: eine perspektivische Ansicht des Permanentmagnet-Innenrotors gemäß Fig. 2 in einem zusammengesetzten Zustand;
- Fig. 4: einen einzelnen Permanentmagneten des elektrischen Antriebsmotors nach der ersten Ausführungsform gemäß Fig. 2 und Fig. 3 in einer Frontansicht, einer Seitenansicht, einer Querschnittsansicht und in einer perspektivischen Darstellung;
- Fig. 5: eine Querschnittsansicht des zusammengesetzten Permanentmagnet-Innenrotors der ersten Ausführungsform gemäß Fig. 3;
- Fig. 6: einen einzelnen Permanentmagneten des elektrischen Antriebsmotors nach einer zweiten Ausführungsform in einer Frontansicht, einer Seitenansicht, einer Querschnittsansicht und in einer perspektivischen Darstellung;
- Fig. 7: eine Querschnittsansicht des zusammengesetzten Permanentmagnet-Innenrotors der zweiten Ausführungsform gemäß Fig. 6; und
- Fig. 8: eine perspektivische Explosionsdarstellung einer dritten Ausführungsform eines Permanentmagnet-Innenrotors des erfindungsgemäßen elektrischen Antriebsmotors.

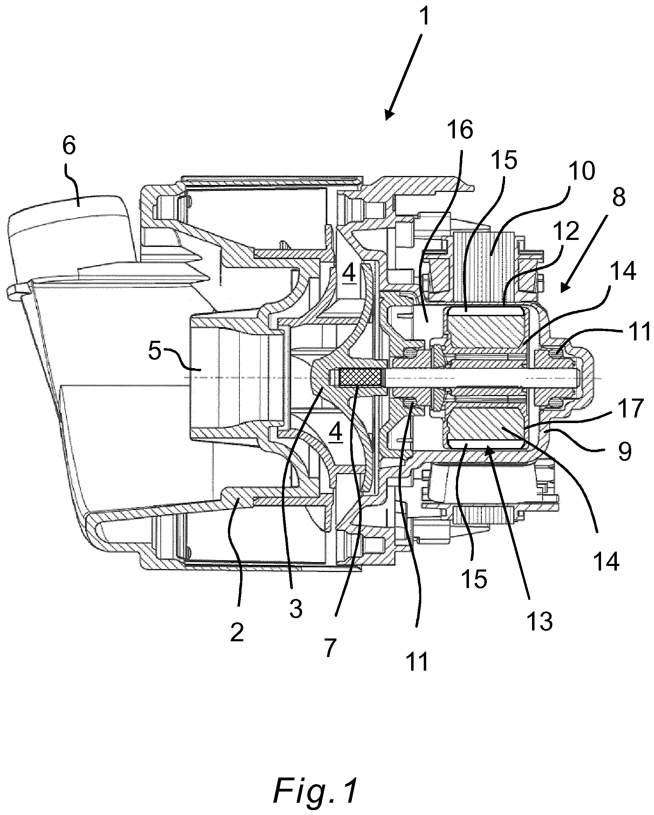

Eine in Fig. 1 beispielhaft dargestellte Pumpe 1 eines Haushaltsgeräts weist ein Pumpengehäuse 2 auf, in dem ein Pumpenrad 3 drehbar angeordnet ist. Das Pumpenrad 3 weist mehrere Schaufeln 4 auf, die ausgebildet und angeordnet sind Flüssigkeit über eine Eintrittsöffnung 5 axial anzusaugen und über eine Austrittsöffnung 6 radial auszustoßen. Im vorliegenden Ausführungsbeispiel bildet die Pumpe 1 folglich eine Kreiselpumpe in der Bauart einer Radialpumpe. Das Pumpenrad 3 sitzt drehfest auf einer Motorwelle 7 eines bürstenlosen Gleichstrom-Nassläufer-Pumpenantriebsmotors 8.

Der Gleichstrom-Nassläufer-Pumpenantriebsmotor 8 ist in einem Motorgehäuse 9 angeordnet. Das Motorgehäuse 9 ist im Falle des vorliegenden Ausführungsbeispiels unmittelbar mit dem Pumpengehäuse 2 verbunden. Gegebenenfalls kann das Motorgehäuse 9 zusammen mit dem Pumpengehäuse 2 eine Baueinheit bilden, oder sogar einteilig ausgebildet sein. Der Gleichstrom-Nassläufer-Pumpenantriebsmotor 8 weist einer elektrisch ansteuerbare Statorwicklung 10 und einen im Feld der Statorwicklung 10 antreibbaren und mittels der Motorwelle 7 im Feld zwischen zwei gegenüberliegenden Lagern 11 drehbar gelagerten Rotor 13 auf.

Der Gleichstrom-Nassläufer-Pumpenantriebsmotor 8 des dargestellten Ausführungsbeispiels ist als ein von Flüssigkeit durchströmter Nassläufermotor ausgebildet, bei dem der Rotor 13 innerhalb eines Motorgehäuses 9 in einem Nassraum 16 gelagert ist, der von Flüssigkeit aus dem Pumpengehäuse 2 durchflutet ist. Die Statorwicklung 10 ist dabei in trockener Umgebung außerhalb des Motorgehäuses 9 angeordnet.

In dargestellten Ausführungsbeispiel weist der Rotor 13 im Wesentlichen die Motorwelle 7, einen auf der Motorwelle 7 drehfest befestigten Magnetträger 14 und an dem Magnetträger 14 mittels eines durch Umspritzen hergestellten Kunststoffkäfigs 17 fixierte Permanentmagnete 15 auf.

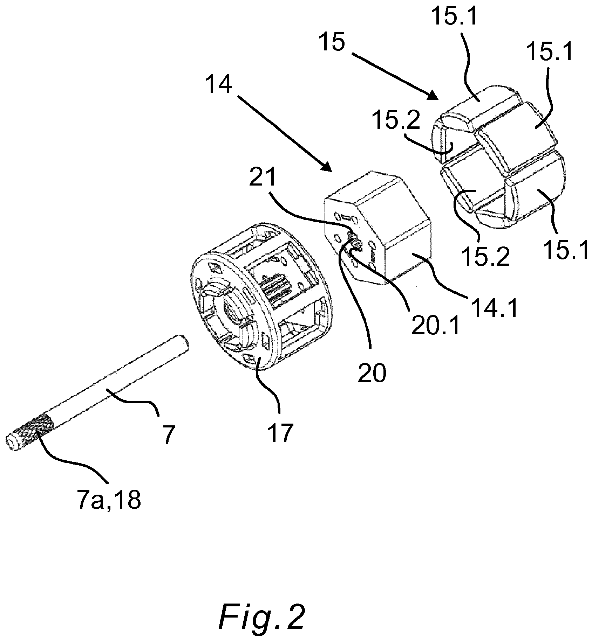

Dieser Permanentmagnet-Innenrotor ist in Fig. 2 in einer explodierten Darstellung näher gezeigt.

Die Motorwelle 7 weist ein vorderes Wellenende 7a auf, an dem das Pumpenrad 3 zu befestigen ist. An diesem vorderen Wellenende 7a weist die Motorwelle 7 an ihrer Außenmantelwand eine Rändelung 18 auf, die ausgebildet ist, das Pumpenrad 3 drehfest auf der Motorwelle 7 zu fixieren.

Die Permanentmagnete 15 des Rotors 13 stehen mit ihren Außenoberflächen 15.1 im Nassraum 16 im Bereich eines Ringspaltes 12 zwischen dem Rotor 13 und der Statorwicklung 10 in unmittelbarem Kontakt zur Flüssigkeit (Fig. 1). Die Permanentmagnete 15 sind aus einem ferromagnetischen Material hergestellt.

Der in dem Nassraum 16 der Pumpe 1 drehantreibbar gelagerte Rotor 13 weist mehrere gleichmäßig über einen Umfang verteilt angeordnete Permanentmagnete 15 auf, deren Außenoberflächen 15.1 in Kontakt zu einer in dem Ringspalt 12 des elektrischen Antriebsmotors 8 befindlichen Flüssigkeit des Nassraumes 16 stehen.

Um die mehreren an wenigstens einer Mantelfläche 14.1 des Magnetträgers 14 verteilt angeordneten Permanentmagnete 15 an dem Magnetträger 14 zu befestigen, werden die Permanentmagnete 15 randseitig rahmenartig mittels eines durch Umspritzen des Magnetträgers 14 hergestellten Kunststoffkäfigs 17 formschlüssig an dem Magnetträger 14 festgehalten.

Damit der durch Umspritzen des Magnetträgers 14 hergestellte Kunststoffkäfig 17 die Permanentmagnete 15 formschlüssig an dem Magnetträger 14 halten kann, weist jeder Permanentmagnet 15 wenigstens eine um die Außenoberfläche 15.1 umlaufende Fase 19 auf, die von dem Kunststoffkäfig 17 ausgefüllt wird, wodurch der jeweilige Permanentmagnet 15 formschlüssig durch den Kunststoffkäfig 17 eingefasst ist.

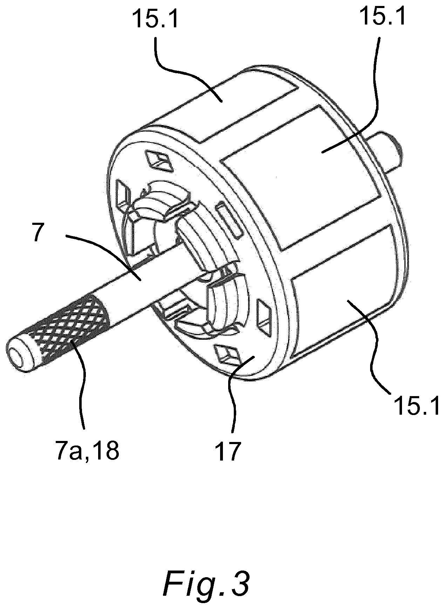

In der ersten Ausführungsform gemäß Fig. 2 bis Fig. 5 weist der Magnetträger 14 einen polygonförmigen, insbesondere hexagonalen Querschnitt auf. Der Magnetträger 14 kann massiv ausgebildet sein, oder aus einem Stapel von mehreren polygonförmigen, insbesondere hexagonalen Stanzblechen in einer dem Fachmann an sich bekannten Weise aufgebaut sein.

Der Magnetträger 14 weist eine Nabe 20 auf, in der die Motorwelle 7 aufgenommen ist. Für eine sichere Befestigung der Motorwelle 7 in dem Magnetträger 14 sind an einer inneren Mantelwand 20.1 der Nabe 20 vorspringende Rippen 21 vorgesehen, die sich insbesondere in axialer Richtung erstrecken.

Auf jeder einzelnen, insbesondere rechteckigen Mantelfläche 14.1 des im Querschnitt polygonförmigen, insbesondere hexagonalen Magnetträgers 14 sitzt jeweils ein separater Permanentmagnet 15 auf. Jeder Permanentmagnet 15 weist eine in Richtung des Magnetträgers 14 weisende, die Mantelfläche 14.1 des Magnetträgers 14 flächig berührende ebene Grundfläche 15.2 auf.

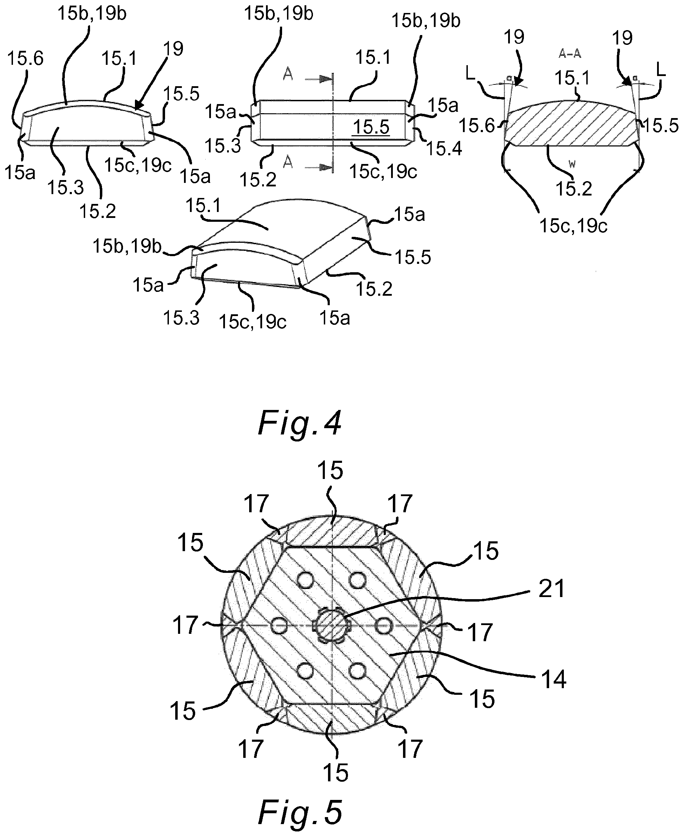

Wie insbesondere in den Darstellungen der Fig. 4 gezeigt, weist jeder Permanentmagnet 15 eine vordere Stirnwand 15.3, eine hintere Stirnwand 15.4, eine in Drehrichtung des Rotors 13 vorauseilende Seitenwand 15.5 und eine nacheilende Seitenwand 15.6 auf. Die erfindungsgemäß wenigstens eine Fase 19 wird dadurch gebildet, dass die vordere Stirnwand 15.3, die hintere Stirnwand 15.4, die vorauseilende Seitenwand 15.5 und die nacheilende Seitenwand 15.6 jeweils aus einer zu einer in Richtung des Magnetträgers 14 weisenden Grundfläche 15.2 des Permanentmagneten 15 senkrechten Lage L um einen Winkel a nach innen angestellten Lage abgeschrägt, wie insbesondere in der Querschnittsdarstellung der Fig. 4 gezeigt, ausgebildet ist. Der Winkel a kann erfindungsgemäß in einem Wertebereich von 1 bis 20 Grad liegen, und weist insbesondere in den dargestellten Ausführungsbeispielen einen Wert von ca. 8 Grad auf. Die vier Seitenkanten 15a des Permanentmagneten 15, welche die vordere Stirnwand 15.3, die hintere Stirnwand 15.4, die vorauseilende Seitenwand 15.5 und die nacheilende Seitenwand 15.6 jeweils unmittelbar verbinden, sind zur Bildung einer einzigen um die Außenoberfläche 15.1 des Permanentmagneten 15 umlaufende Fase 19 abgerundet ausgebildet.

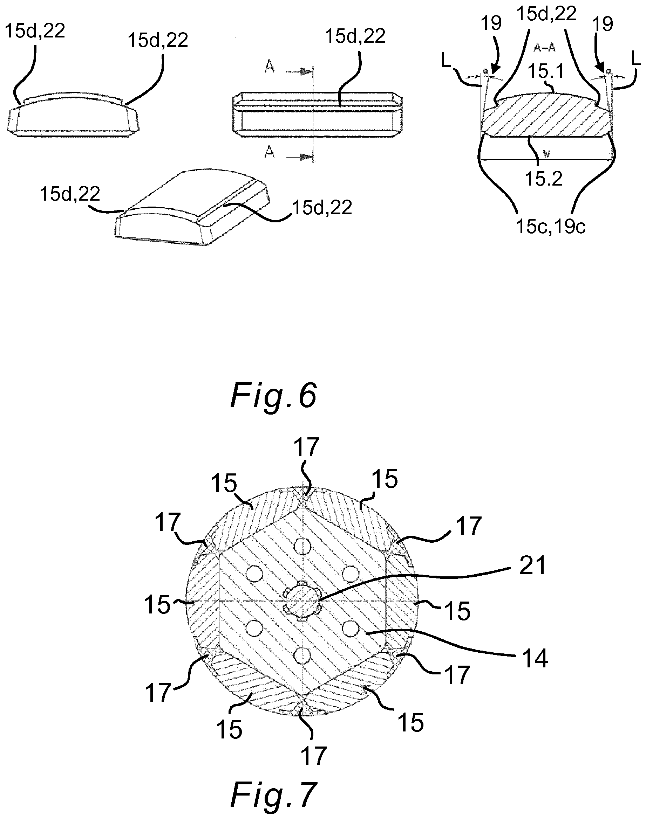

Sowohl in der ersten Ausführungsform der gemäß Fig. 2 bis Fig. 5, als auch in der zweiten Ausführungsform gemäß Fig. 6 und Fig. 7 ist wenigstens eine die vordere Stirnwand 15.3, die hintere Stirnwand 15.4, die vorauseilende Seitenwand 15.5 und/oder die nacheilende Seitenwand 15.6 jeweils mit der Außenoberfläche 15.1 unmittelbar verbindende Oberflächenkante 15b, insbesondere die die vordere Stirnwand 15.3 und die hintere Stirnwand 15.4 jeweils mit der Außenoberfläche 15.1 unmittelbar verbindende Oberflächenkanten 15b mit einer zusätzlichen Fase 19b versehen.

In der ersten Ausführungsform gemäß Fig. 2 bis Fig. 5 weisen außerdem die Grundkanten 15c, welche jeweils die vordere Stirnwand 15.3, die hintere Stirnwand 15.4, die vorauseilende Seitenwand 15.5 bzw. die nacheilende Seitenwand 15.6 mit der in Richtung des Magnetträgers 14 weisenden Grundfläche 15.2 des Permanentmagneten 15 unmittelbar verbinden, jeweils einer weitere Fase 19c auf.

Die Querschnittsdarstellung gemäß Fig. 5 zeigt, wie das umspritzte Kunststoffmaterial des Kunststoffkäfigs 17 die Fasen 19 und 19c der Permanentmagnete 15 nach der ersten Ausführungsform formschlüssig umgreift, um die Permanentmagnete 15 an dem Magnetträger 14 zu halten.

In der zweiten Ausführungsform gemäß Fig. 6 und Fig. 7 sind die Permanentmagnete 15 zunächst in ihrer Gestalt analog der ersten Ausführungsform gemäß Fig. 2 bis Fig. 5 ausgebildet. Darüber hinaus weisen die Permanentmagnete 15 der zweiten Ausführungsform zusätzlich gestuft ausgeführte Oberflächenkanten 15d auf.

So kann wenigstens eine die vordere Stirnwand 15.3, die hintere Stirnwand 15.4, die vorauseilende Seitenwand 15.5 und/oder die nacheilende Seitenwand 15.6 jeweils mit der Außenoberfläche 15.1 unmittelbar verbindende Oberflächenkante 15d, insbesondere ausschließlich nur die die vorauseilende Seitenwand 15.5 und die nacheilende Seitenwand 15.6 jeweils mit der Außenoberfläche 15.1 unmittelbar verbindende Oberflächenkanten 15d gestuft ausgebildet sein.

Die gestuft ausgebildete Oberflächenkante 15d wird durch eine Ausnehmung 22 gebildet, die im axialen Querschnitt des Permanentmagneten eine Breite aufweist, die zwischen 10% und 15%, insbesondere 12% oder 13% der Gesamtbreite des Permanentmagneten beträgt. Im axialen Querschnitt des Permanentmagneten weist die durch eine Ausnehmung gebildete, gestufte Oberflächenkante eine Mindesthöhe von wenigstens 0,5 Millimeter, insbesondere von wenigstens 0,6 Millimeter auf.

Auch in der zweiten Ausführungsform ist die wenigstens eine, die vordere Stirnwand 15.3, die hintere Stirnwand 15.4, die vorauseilende Seitenwand 15.5 und/oder die nacheilende Seitenwand 15.6 jeweils mit der in Richtung des Magnetträgers 14 weisenden Grundfläche 15.2 des Permanentmagneten 15 unmittelbar verbindende Grundkante 15c mit der weiteren Fase 19c versehen.

Die Querschnittsdarstellung gemäß Fig. 7 zeigt, wie das umspritzte Kunststoffmaterial des Kunststoffkäfigs 17 die Fasen 19 und 19c und die gestuften Ausnehmungen 22 der Permanentmagnete 15 nach der zweiten Ausführungsform formschlüssig umgreift, um die Permanentmagnete 15 an dem Magnetträger 14 zu halten.

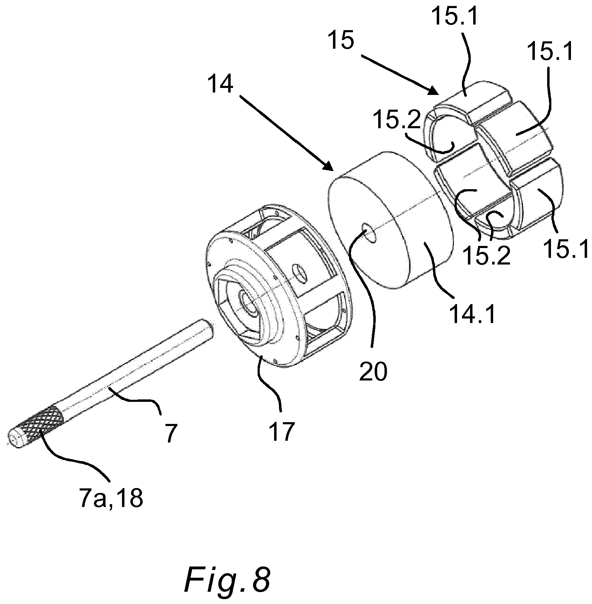

In der dritten Ausführungsform gemäß Fig. 8 weist jeder Permanentmagnet 15 eine in Richtung des Magnetträgers 14 weisende, im Querschnitt kreisbogenförmige Grundfläche 15.2 aufweist und der Magnetträger 14 einen kreisförmigen Querschnitt auf.

### BEZUGSZEICHENLISTE

- 1: Pumpe
- 2: Pumpengehäuse
- 3: Pumpenrad
- 4: Schaufeln
- 5: Eintrittsöffnung
- 6: Austrittsöffnung
- 7: Motorwelle
- 7a: vorderes Wellenende
- 8: Antriebsmotor
- 9: Motorgehäuse
- 10: Statorwicklung
- 11: Lager
- 12: Ringspalt
- 13: Rotor
- 14: Magnetträger
- 14.1: Mantelfläche
- 15: Permanentmagnete
- 15.1: Außenoberfläche
- 15.2: Grundfläche
- 15.3: vordere Stirnwand
- 15.4: hintere Stirnwand
- 15.5: vorauseilende Seitenwand
- 15.6: nacheilende Seitenwand
- 15a: Seitenkanten
- 15b,15d: Oberflächenkante
- 15c: Grundkanten
- 16: Nassraum
- 17: Kunststoffkäfig
- 18: Rändelung
- 19: Fase
- 19b: zusätzliche Fase
- 19c: weitere Fase
- 20: Nabe
- 20.1: innere Mantelwand
- 21: Rippen
- 22: Ausnehmung

## Patentansprüche

1. Elektrischer Antriebsmotor für eine Pumpe (1), aufweisend eine elektrisch ansteuerbare Statorwicklung (10) und einen im Feld der Statorwicklung (10) unter Belassen eines Ringspaltes (12) drehantreibbar gelagerten Rotor (13), der eine Motorwelle (7), einen auf der Motorwelle (7) sitzenden Magnetträger (14) und wenigstens einen auf dem Magnetträger (14) angeordneten Permanentmagnet (15) aufweist, **dadurch gekennzeichnet, dass** der Magnetträger (14) aus einem ferromagnetischen Chromstahl hergestellt ist.

2. Elektrischer Antriebsmotor nach Anspruch 1, **dadurch gekennzeichnet, dass** der Magnetträger (14) aus einem ferritischen oder martensitischen Chromstahl mit wenigstens 10,5 % Chromanteil hergestellt ist.

3. Elektrischer Antriebsmotor nach Anspruch 1 oder 2, **dadurch gekennzeichnet, dass** der Magnetträger (14) aus einem nickelfreien Chromstahl hergestellt ist.

4. Elektrischer Antriebsmotor nach Anspruch 2 oder 3, **dadurch gekennzeichnet, dass** der Magnetträger (14) aus einem Chromstahl mit 16% bis 18% Chromanteil, insbesondere ca. 17% Chromanteil, insbesondere der Werkstoffnummer 1.4016 gemäß EN 10027-2 (X6Cr17, AISI 430) hergestellt ist.

5. Elektrischer Antriebsmotor nach einem der Ansprüche 1 bis 4, **dadurch gekennzeichnet, dass** der Magnetträger (14) aus einem Blechpaket von mehreren übereinander gestapelten, miteinander verbundenen Blechplatten hergestellt ist.

6. Elektrischer Antriebsmotor nach einem der Ansprüche 1 bis 5, **dadurch gekennzeichnet, dass** die Motorwelle (7) aus einem Chromstahl hergestellt ist.

7. Elektrischer Antriebsmotor nach Anspruch 6, **dadurch gekennzeichnet, dass** die Motorwelle (7) aus einem härtbaren, insbesondere austenitischen oder martensitischen Chromstahl hergestellt ist.

8. Elektrischer Antriebsmotor nach Anspruch 6 oder 7, **dadurch gekennzeichnet, dass** die Motorwelle (7) aus einem Chromstahl mit 15% bis 17% Chromanteil, insbesondere ca. 16% Chromanteil und 3% bis 5% Nickelanteil, insbesondere ca. 4% Nickelanteil, insbesondere der Werkstoffnummer 1.4542 gemäß EN 10027-2 (X5CrNiCuNb16-4, AISI 630) hergestellt ist.

9. Elektrischer Antriebsmotor nach einem der Ansprüche 1 bis 8, **dadurch gekennzeichnet, dass** der Rotor (13) mehrere um den Magnetträger (14) verteilt angeordnete Permanentmagnete (15) aufweist und der Magnetträger (14) einen polygonförmigen, insbesondere hexagonalen Querschnitt aufweist und jeder Permanentmagnet (15) eine in Richtung des Magnetträgers (14) weisende ebene Grundfläche (15.2) aufweist.

10. Elektrischer Antriebsmotor nach einem der Ansprüche 1 bis 9, **dadurch gekennzeichnet, dass** der Rotor (13) mehrere um den Magnetträger (14) verteilt angeordnete Permanentmagnete (15) aufweist und der Magnetträger (14) einen kreisförmigen Querschnitt aufweist und jeder Permanentmagnet (15) eine in Richtung des Magnetträgers (14) weisende, im Querschnitt kreisbogenförmige Grundfläche (15.2) aufweist.

11. Elektrischer Antriebsmotor nach Anspruch 9 oder 10, **dadurch gekennzeichnet, dass** die Permanentmagnete (15) mittels eines durch Umspritzen des Magnetträgers (14) hergestellten Kunststoffkäfigs (17) an dem Magnetträger (14) befestigt sind.

12. Elektrischer Antriebsmotor nach einem der Ansprüche 1 bis 11, **dadurch gekennzeichnet, dass** der Magnetträger (14) eine Nabe (20) zur Aufnahme der Motorwelle (7) aufweist, deren innere Mantelwand (20.1) mit vorspringenden Rippen (21) versehen ist, die sich insbesondere in axialer Richtung erstrecken.

13. Pumpe, aufweisend einen elektrischen Antriebsmotor (8) nach einem der Ansprüche 1 bis 12, bei welcher der Rotor (13), insbesondere dessen Magnetträger (14) und/oder dessen die Motorwelle (7) in einem Nassraum (16) der Pumpe (1) drehantreibbar gelagert ist und die Außenoberflächen (15.1) der Permanentmagnete (15) in Kontakt zu einer in dem Ringspalt (12) des elektrischen Antriebsmotors (8) befindlichen Flüssigkeit des Nassraumes (16) stehen.

14. Pumpe nach Anspruch 13, **dadurch gekennzeichnet, dass** die Pumpe (1) ein von dem elektrischen Antriebsmotor (8) antreibbares Pumpenrad (3) aufweist und die Motorwelle (7) des elektrischen Antriebsmotors (8) eine Rändelung (18) aufweist, auf welcher das Pumpenrad (3) befestigt ist.

15. Haushaltsgerät, insbesondere Geschirrspülmaschine, Waschmaschine, Staubsauger, Trockner oder der gleichen, aufweisend einen elektrischen Antriebsmotor (8) nach einem der Ansprüche 1 bis 12 und/oder eine Pumpe (1) nach Anspruch 13 oder 14.

## Claims

1. Electric drive motor for a pump (1), having an electrically actuatable stator winding (10) and a rotor (13) mounted to be rotationally drivable in the field of the stator winding (10) leaving an annular gap (12), said rotor having a motor shaft (7), a magnet carrier (14) sitting on said motor shaft (7) and at least one permanent magnet (15) arranged on the magnet carrier (14), **characterised in that** the magnet carrier (14) is produced from a ferromagnetic chrome steel.

2. Electric drive motor according to claim 1, **characterised in that** the magnet carrier (14) is produced from a ferritic or martensitic chrome steel with a chrome proportion of at least 10.5%.

3. Electric drive motor according to claim 1 or 2, **characterised in that** the magnet carrier (14) is produced from a nickel-free chrome steel.

4. Electric drive motor according to claim 2 or 3, **characterised in that** the magnet carrier (14) is produced from a chrome steel having a chrome proportion of 16% to 18%, in particular approx. 17%, in particular with the material number 1.4016 according to EN 10027-2 (X6Cr17, AISI 430).

5. Electric drive motor according to one of claims 1 to 4, **characterised in that** the magnet carrier (14) is produced from a laminated core of several metal sheets stacked one on top of the other and connected to one another.

6. Electric drive motor according to one of claims 1 to 5, **characterised in that** the motor shaft (7) is produced from a chrome steel.

7. Electric drive motor according to claim 6, **characterised in that** the motor shaft (7) is produced from a curable, in particular austenitic or martensitic chrome steel.

8. Electric drive motor according to claim 6 or 7, **characterised in that** the motor shaft (7) is produced from a chrome steel having a chrome proportion of 15% to 17%, in particular approx. 16% and a nickel proportion of 3% to 5%, in particular approx. 4%, in particular with the material number 1.4542 according to EN 10027-2 (X5CrNiCuNb16-4, AISI 630).

9. Electric drive motor according to one of claims 1 to 8, **characterised in that** the rotor (13) has a number of permanent magnets (15) arranged in a distributed manner about the magnet carrier (14) and the magnet carrier (14) has a polygonal, in particular hexagonal cross-section and each permanent magnet (15) has a planar base area (15.2) pointing in the direction of the magnet carrier (14).

10. Electric drive motor according to one of claims 1 to 9, **characterised in that** the rotor (13) has a number of permanent magnets (15) arranged in a distributed manner about the magnet carrier (14) and the magnet carrier (14) has a circular cross-section and each permanent magnet (15) has a base area (15.2) which points in the direction of the magnet carrier (14) and has a circular arc-shaped cross-section.

11. Electric drive motor according to claim 9 or 10, **characterised in that** the permanent magnets (15) are fastened on the magnet carrier (14) by means of a plastic cage (17) produced by injection moulding the magnet carrier (14).

12. Electric drive motor according to one of claims 1 to 11, **characterised in that** the magnet carrier (14) has a hub (20) for receiving the motor shaft (7), the inner casing wall (20.1) of which is provided with projecting ribs (21) which extend in particular in the axial direction.

13. Pump, having an electric drive motor (8) according to one of claims 1 to 12, in which the rotor (13), in particular its magnet carrier (14) and/or its motor shaft (7) is mounted to be rotationally drivable in a wet area (16) of the pump (1) and the outer surfaces (15. 1) of the permanent magnets (15) are in contact with a liquid of the wet area (16) which is disposed in the annular gap (12) of the electric drive motor (8).

14. Pump according to claim 13, **characterised in that** the pump (1) has a pump wheel (3) which can be driven by the electric drive motor (8) and the motor shaft (7) of the electric drive motor (8) has a knurling (18), to which the pump wheel (3) is fastened.

15. Domestic appliance, in particular dishwasher, washing machine, vacuum cleaner, dryer or suchlike, having an electric drive motor (8) according to one of claims 1 to 12 and/or a pump (1) according to claim 13 or 14.

## Revendications

1. Moteur d'entraînement électrique, destiné à une pompe (1), qui comporte un enroulement statorique (10) excitable électriquement et un rotor (13), supporté en rotation dans le champ de l'enroulement statorique (10) en laissant un entrefer annulaire (12), qui comporte un arbre moteur (7), un support d'aimant (14) en appui sur l'arbre moteur (7) et au moins un aimant permanent (15) disposé sur le support d'aimant (14), **caractérisé en ce que** le support d'aimant (14) est fabriqué en acier au chrome ferromagnétique.

2. Moteur d'entraînement électrique selon la revendication 1, **caractérisé en ce que** le support d'aimant (14) est fabriqué en acier au chrome, ferritique ou martensitique, avec une part en chrome d'au moins 10,5 %.

3. Moteur d'entraînement électrique selon la revendication 1 ou 2, **caractérisé en ce que** le support d'aimant (14) est fabriqué en acier au chrome sans nickel.

4. Moteur d'entraînement électrique selon la revendication 2 ou 3, **caractérisé en ce que** le support d'aimant (14) est fabriqué en acier au chrome avec une part en chrome comprise entre 16 % et 18 %, en particulier une part en chrome d'environ 17 %, en particulier le numéro de matériau 1.4016, selon EN 10027-2 (X6Cr17, AISI 430).

5. Moteur d'entraînement électrique selon l'une des revendications 1 à 4, **caractérisé en ce que** le support d'aimant (14) est fabriqué à partir d'un paquet de tôles de plusieurs de tôles reliées ensemble et empilées les unes sur les autres.

6. Moteur d'entraînement électrique selon l'une des revendications 1 à 5, **caractérisé en ce que** l'arbre moteur (7) est fabriqué en acier au chrome.

7. Moteur d'entraînement électrique selon la revendication 6, **caractérisé en ce que** l'arbre moteur (7) est fabriqué en acier au chrome martensitique ou en particulier, austénitique, durcissable.

8. Moteur d'entraînement électrique selon la revendication 6 ou 7, **caractérisé en ce que** l'arbre moteur (7) est fabriqué en acier au chrome avec une part en chrome comprise entre 15 % et 17 %, en particulier une part en chrome d'environ 16 % et une part en nickel comprise entre 3 % et 5 %, en particulier une part en nickel d'environ 4 %, en particulier le numéro de matériau 1.4542 selon EN 10027-2 (X5CrNiCuNb16-4, AISI 630).

9. Moteur d'entraînement électrique selon l'une des revendications 1 à 8, **caractérisé en ce que** le rotor (13) comporte plusieurs aimants permanents (15) disposés répartis autour du support d'aimant (14), **en ce que** le support d'aimant (14) comporte une section transversale, en forme de polygone, en particulier hexagonale, et **en ce que** chaque aimant permanent (15) comporte une surface de base (15.2) plane en direction du support d'aimant (14).

10. Moteur d'entraînement électrique selon l'une des revendications 1 à 9, **caractérisé en ce que** le rotor (13) comporte plusieurs aimants permanents (15) disposés répartis autour du support d'aimant (14), **en ce que** le support d'aimant (14) comporte une section transversale circulaire et **en ce que** chaque aimant permanent (15) comporte une surface de base (15.2) en forme d'arc de cercle en section transversale, en direction du support d'aimant (14).

11. Moteur d'entraînement électrique selon la revendication 9 ou 10, **caractérisé en ce que** les aimants permanents (15) sont fixés au niveau du support d'aimant (14) au moyen d'une cage en plastique (17) fabriquée par surmoulage du support d'aimant (14).

12. Moteur d'entraînement électrique selon l'une des revendications 1 à 11, **caractérisé en ce que** le support d'aimant (14) comporte un moyeu (20) pour recevoir l'arbre moteur (7), dont la paroi d'enveloppe intérieure (20.1) est munie de nervures (21) en saillie, qui s'étendent en particulier dans le sens axial.

13. Pompe, comportant un moteur d'entraînement électrique (8) selon l'une des revendications 1 à 12, pour laquelle le rotor (13), en particulier son support d'aimant (14) et/ou son arbre moteur (7), peut être entrainé en rotation dans un espace humide (16) de la pompe (1) et les surfaces extérieures (15.1) des aimants permanents (15) sont en contact avec un liquide, situé dans l'entrefer annulaire (12) du moteur d'entrainement électrique (8), de l'espace humide (16).

14. Pompe selon la revendication 13, **caractérisée en ce que** la pompe (1) comporte une roue de pompe (3) pouvant être entrainée par le moteur d'entraînement électrique (8) et **en ce que** l'arbre moteur (7) du moteur d'entraînement électrique (8) comporte un moletage (18) sur lequel est fixée la roue de pompe (3).

15. Appareil ménager, en particulier lave-vaisselle, lave-linge, aspirateur, sèche-linge ou similaire, comportant un moteur d'entraînement électrique (8) selon l'une des revendications 1 à 12 et/ou une telle pompe (1) selon la revendication 13 ou 14.
